# EUROPÄISCHE PATENTANMELDUNG

(11) **EP 0 974 501 A1**
(43) Veröffentlichungstag der Anmeldung: **26.01.2000**
(21) Anmeldenummer: 99112708.5
(22) Anmeldetag: 30.06.1999
(51) Int. Cl.: B60R 22/18

(54) **Sicherheitsgurt mit einer Steckzunge**

(30) Priorität: 18.07.1998 DE 19832467
(71) Anmelder: Volkswagen Aktiengesellschaft, 38436 Wolfsburg (DE)
(72) Erfinder: Möker, Carsten, Dipl.-Ing., 38471 Rühen (DE)

(57) **Zusammenfassung**

Die Erfindung bezieht sich auf einen Sicherheitsgurt mit einer Steckzunge und wenigstens einem Gurtstraffer, wobei die Steckzunge ein Führungsteil mit einer Ausnehmung für den Sicherheitsgurt aufweist, in der dieser geführt und an einem Umlenkelement umgelenkt wird. Um die Gefahr einer Verletzung des angegurteten Fahrzeuginsassen im Beckenbereich zu reduzieren, ist das Umlenkelement eine ortsfest an der Ausnehmung (6; 6a) gelagerte und frei drehbare Umlenkrolle (8; 10).

## Beschreibung

Die Erfindung betrifft einen Sicherheitsgurt mit einer Steckzunge zum Angurten eines Insassen in einem Fahrzeug, vorzugsweise einen Dreipunkt-Sicherheitsgurt in einem Personenkraftwagen.

Bei einem Dreipunkt-Sicherheitsgurt ist im Übergangsbereich zwischen einem Schulterteil und einem Beckenteil eine Steckzunge angeordnet, wobei der Sicherheitsgurt einstückig ausgebildet ist. Die Steckzunge dient einerseits dem Angurten als Vorgang und andererseits dem Umlenken des Sicherheitsgurtes und der damit verbundenen Abgrenzung des Schulterteils (Schultergurt) vom Beckenteil (Beckengurt). Zum Führen und Umlenken des Sicherheitsgurtes, im folgenden mit Gurt bezeichnet, weist die Steckzunge ein Führungsteil mit einer Ausnehmung mit einer Umlenkkante auf, an der der Gurt unter Verschiebung seines Umlenkbereiches gelagert ist. Wenn der Oberkörper des angegurteten Insassen eine langsame Bewegung nach vorne vollführt, führt die damit verbundene Verlängerung des Schultergurtes zu einem Nachlassen von Gurtlänge aus einer Gurtaufrolleinrichtung (Gurtstraffer). Bei einer raschen Bewegung des Fahrzeuginsassen nach vorne infolge einer starken oder gar schlagartigen Verzögerung wird die Gurtverankerung in der Gurtaufrolleinrichtung blockiert und eine weitere Relativbewegung des Fahrzeuginsassen im Bereich des Schultergurtes verhindert. Eine vorhandene Gurtlose im Beckenbereich führt zu einer relativen Beschleunigung des Beckens des Fahrzeuginsassen, das infolge der Verzögerung des Fahrzeugs und damit des Beckengurtes durch diesen schlagartig verzögert wird, auch wenn die Gurtlose durch die Blockierung der Gurtverankerung und die Straffung des Schultergurtes über die Steckzunge verringert wird.

Zur Reduzierung der Verletzungsgefahr ist in der DE 27 41 297 vorgeschlagen worden, die Ausnehmung für den Gurt an der Umlenkkante so zu gestalten, daß dessen Bewegung bei einem nichtgestrafften Gurt erleichtert und bei einem straffen Gurt erschwert ist. Dazu ist an der Umlenkkante eine parallel zu dieser drehbar gelagerte und unter Federspannung stehende Rolle angeordnet, über die der Gurt geführt wird. Bei einer Straffung des Gurtes wird die Umlenkrolle in eine an der Umlenkkante ausgebildete Vertiefung gedrückt, so daß der Gurt zur Anlage an der Umlenkkante gelangt und an dieser gebremst und somit eine Verkürzung des Beckengurtes verhindert wird. Eine relative Beschleunigung des Beckens des Fahrzeuginsassen kann damit nicht verhindert werden.

In der JP 80 40 195 A ist eine Steckzunge beschrieben, bei der zur Erreichung des gleichen Effektes der Gurt schlaufenartig über einen in einer Ausnehmung verschiebbar angeordneten Umlenk-Spannriegel umgelenkt ist. Der Gurt wird bei dieser Anordnung nur auf einer Seite der Steckzunge geführt, so daß dieser bei einer Gurtstraffung und einer damit verbundenen Veränderung der Stellung des Umlenk-Spannriegels gegen eine Kante der Ausnehmung gedrückt und gebremst wird.

Die Abbremsung der Gurtbewegung kann jedoch mit einem erheblichen Spannungsaufbau im Umlenkbereich des Gurtes einhergehen, so daß die Gefahr einer Beschädigung oder gar eines Bruches desselben gegeben ist. Die EP 0 721 867 A1 beschreibt deswegen einen anderen Weg. Sie hat eine Steckzunge zum Gegenstand, bei der der Gurt über eine abgerundete und kunststoffbeschichtete Kante umgelenkt wird und an dieser gleiten kann, so daß die Beseitigung einer Gurtlose vor einem Crash begünstigt und die Gefahr einer Beschädigung im Crashfall vermindert werden.

Ferner ist es aus der DE 295 10 050 U1 und der DE 295 02 192 U1 bekannt, einen Umlenkbeschlag für einen Sicherheitsgurt mit einer Umlenkrolle auszustatten.

Es ist Aufgabe der Erfindung, einen Sicherheitsgurt mit einer Steckzunge nach dem Oberbegriff des Anspruchs 1 zu schaffen, bei dem insbesondere bei einem Frontalcrash die Gefahr einer Verletzung des angegurteten Fahrzeuginsassen im Beckenbereich reduziert ist.

Diese Aufgabe wird bei einem Sicherheitsgurt nach dem Oberbegriff des Anspruchs 1 durch dessen kennzeichnende Merkmale gelöst.

Der erfindungsgemäße Sicherheitsgurt, im folgenden Gurt genannt, ist mit einer Steckzunge versehen, die ein Führungsteil mit einer Ausnehmung für den Gurt aufweist, in dem dieser geführt und umgelenkt wird, wobei die Umlenkung über eine ortsfest im Bereich der Ausnehmung gelagerte und frei drehbare Umlenkrolle bewirkt wird. Der Gurt liegt fest an der Rolle an, während diese mit möglichst geringer Reibung drehbar gelagert ist. Durch die minimierte Reibung zwischen dem Gurt und der Steckzunge wird erreicht, daß eine Gurtlose im Beckenbereich nicht auftreten kann und daß sowohl der Schulter- als auch der Beckengurt straff am Körper des Fahrzeuginsassen anliegen. Der Beckenbereich des Insassen ist bei einem Frontalcrash von Beginn der Fahrzeugverzögerung an durch den Gurt beaufschlagt und wird nicht erst durch eine auftretende Beckengurtstraffung bzw. nach einer Beschleunigung des Beckens schlagartig beaufschlagt. Ein Submarining wird verhindert. Die Ausbildung von Spannungsspitzen im Gurt im Umlenkbereich wird ebenfalls vermieden, wodurch auch die Gefahr einer Beschädigung des Gurtes weitestgehend beseitigt ist. Ein weiterer Vorteil ist eine wesentliche Verbesserung des Komforts beim Anlegen des Sicherheitsgurtes infolge der Verringerung der Reibung desselben an der Steckzunge. Das Gurtband braucht nicht mehr durch den engen Schlitz im Führungsteil nachgezogen zu werden.

Dabei kann das Führungsteil der Steckzunge zwei entgegen der Steckrichtung ausgebildete Schenkel aufweisen, zwischen denen zur Lagerung der Umlenkrolle eine Lagerachse oder zwei einander entgegengerichtete Lagerzapfen fest angeordnet sind. Diese können auf einfache Weise jeweils durch eine formschlüssige Verbindung, insbesondere durch Niete oder Schrauben, oder auch durch eine stoffschlüssige Verbindung, insbesondere eine Verschweißung, fest mit den Schenkeln verbunden sein.

Die Umlenkrolle ist zur Minimierung der Reibung vorteilhaft über Kugel- oder Wälzlager an den Lagerzapfen oder der Lagerachse angeordnet. Die Lagerung kann jedoch auch eine Gleitlagerung sein. Vorteilhaft ist auch eine Magnetlagerung, bei der beispielsweise die Umlenkrolle und die Lagerachse oder die Lagerzapfen aus einem magnetischen Werkstoff bestehen und im Abstand voneinander unter Bildung eines umlaufenden Spaltes angeordnet und durch ein Magnetfeld im Abstand gehalten sind. Alternativ kann das erforderliche elektromagnetische Feld mittels eines Elektromagneten erzeugt werden. Reibungskräfte treten nur noch an einer Anlagelinie der Umlenkrolle an den Lagerzapfen oder der Lagerachse bei angelegtem Gurt auf.

Im einfachsten Falle ist die Umlenkrolle zylindrisch gestaltet. Sie kann jedoch in ihren beiden Endbereichen trichter- oder trompetenförmig ausgebildet sein, damit der Gurt auch eine stark reibungsgeminderte Seitenführung hat.

Die Umlenkrolle ist vorzugsweise so ausgebildet, daß sie eine Oberfläche aufweist, die einen möglichst hohen Reibungskoeffizienten gegenüber dem Sicherheitsgurt hat. Dazu kann die Oberfläche geriffelt, also beispielsweise mit Einkerbungen versehen, sein. Sie kann jedoch auch mit koaxial angeordneten umlaufenden Einsenkungen und Erhebungen versehen sein, um die Flächenpressung zwischen Gurt und Umlenkrolle zu erhöhen.

Eine weitere vorteilhafte Ausgestaltung der Umlenkrolle zur Erhöhung des Reibungskoeffizienten ist eine Oberflächenbeschichtung der Mantelfläche.

Die Erfindung wird nachstehend anhand von Ausführungsbeispielen erläutert. In der zugehörigen Zeichnung zeigen schematisch:
- Fig. 1:: die Anordnung eines ersten Ausführungsbeispiels eines erfindungsgemäßen Sicherheitgurtes mit einer Steckzunge,
- Fig. 2a:: die Steckzunge des Ausführungsbeispiels der Fig. 1 in einer Hauptansicht,
- Fig. 2b:: die Steckzunge des Ausführungsbeispiels der Figur 1 in einer Seitenansicht, teilweise geschnitten (Schnitt II-II) und
- Fig. 3:: ein weiteres Ausführungsbeispiel einer Steckzunge eines erfindungsgemäßen Sicherheitsgurtes.

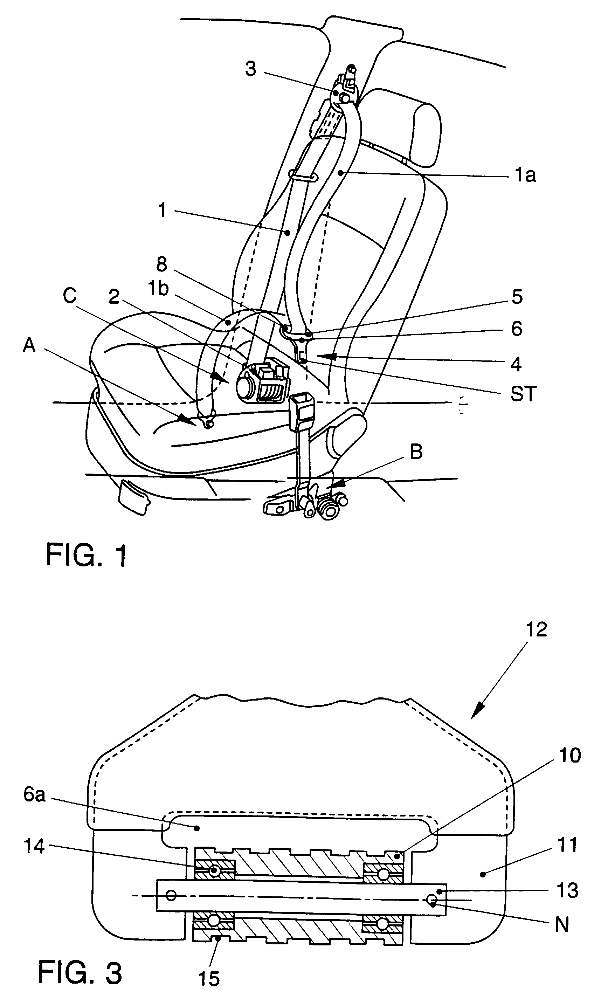

In Fig. 1 ist ein Sicherheitsgurt 1 gezeigt, der im Bereich eines Fahrzeugsitzes im Angurtzustand an den Punkten A, B und C am Fahrzeugaufbau bzw. am Fahrzeugsitz gehaltert ist, wobei der Sicherheitsgurt im Bereich der B-Säule im Halterungspunkt C mit einem Gurtstraffer 2 verbunden und oberhalb des Schulterbereiches des Fahrzeuginsassen über einen Umlenkbeschlag 3 zum Punkt B geführt ist. Die Verbindung zwischen A und B und zwischen C und B durch den Gurt 1 wird beim Angurten durch den Fahrzeuginsassen mittels einer Steckzunge 4 hergestellt, wodurch der Gurt in einen Schulterbereich 1a - Schultergurt 1a - und in einen Beckenbereich 1b - Beckengurt 1b - mit einem fließenden Übergang geteilt wird.

Die Steckzunge 4 weist ein Führungsteil 5 mit einer schlitzförmigen Ausnehmung 6 für den Sicherheitsgurt 1 auf, wobei an der dem Steckteil ST abgewandten Seite der Ausnehmung 6 eine Umlenkrolle 8 schlitzparallel angeordnet ist, über die der Sicherheitsgurt 1 umgelenkt wird.

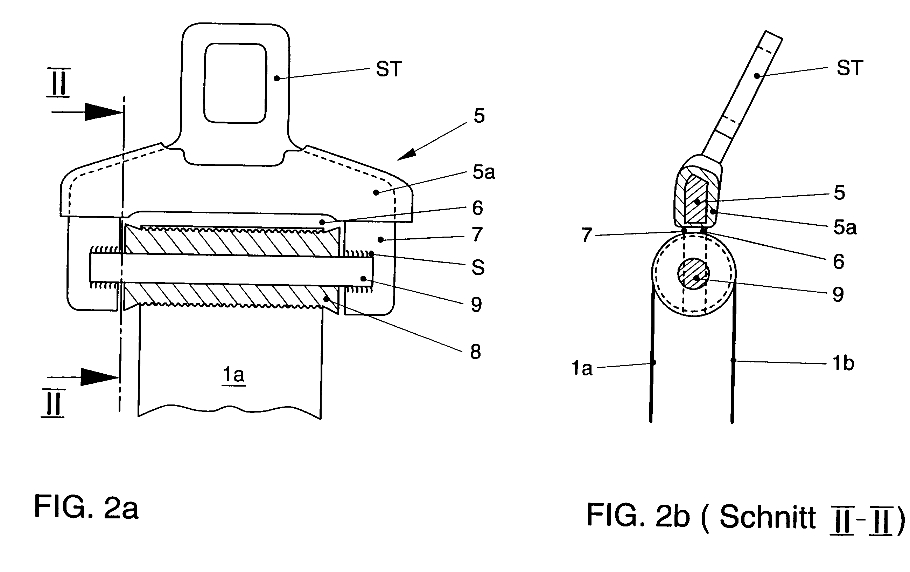

Die Steckzunge 4 ist vergrößert und schematisch in den Fig. 2a und 2b dargestellt. Das Führungsteil 5 weist zwei die Ausnehmungsschmalseiten begrenzende Schenkel 7 auf, zwischen denen eine durchgehende Lagerachse 9 eingeschweißt (S) ist. Die Umlenkrolle 8 ist gleitend auf der Lagerachse 9 angeordnet und an ihrem freien Enden trompetenförmig ausgebildet, um dem Sicherheitsgurt auch eine möglichst reibungsarme Seitenführung zu geben. Die Oberfläche der Umlenkrolle 8 ist zur Erhöhung der Reibung gegenüber dem Sicherheitsgurt 1 geriffelt. Der der Umlenkrolle 8 gegenüber angeordnete Bereich des Führungsteils 5 weist einen Kunststoffmantel 5a auf.

Beim Anlegen des Gurtes 1 durch den auf dem Sitz befindlichen Fahrzeuginsassen wird ein Straffen des Beckengurtes 1b durch die in der Steckzunge 4 angeordnete Umlenkrolle 8 ermöglicht, so daß dieser sich gleichmäßig straff an den Becken- und den Schulterbereich des Insassen anlegt. Eine Gurtlose tritt im Beckenbereich somit nicht auf

Fig. 3 zeigt eine weitere Ausführung einer erfindungsgemäßen Steckzunge. Bei dieser ist eine Umlenkrolle 10 an einer mit den Schenkeln 11 eines Führungsteiles 12 vernieteten (N) Lagerachse 13 über Rillenkugellager 14 gelagert. Der Mantel der Umlenkrolle 10 weist im Abstand angeordnete koaxial verlaufende Einsenkungen 15 auf. Durch die Rollenlagerung der Umlenkrolle 10 ist die Reibung derselben gegenüber der Lagerachse 13, bezogen auf die vorbeschriebene Ausführung (Fig. 2a, 2b), minimiert.

## Patentansprüche

1. Sicherheitsgurt mit einer Steckzunge und wenigstens einer Gurtaufrolleinrichtung, wobei die Steckzunge ein Führungsteil mit einer Ausnehmung für den Sicherheitsgurt aufweist, in der dieser geführt und an einem Umlenkelement umgelenkt wird, dadurch gekennzeichnet, daß
das Umlenkelement eine ortsfest im Bereich der Ausnehmung (6; 6a) gelagerte und frei drehbare Umlenkrolle (8; 10) ist.

2. Sicherheitsgurt nach Anspruch 1,
dadurch gekennzeichnet, daß
das Führungsteil (5; 12) zwei die Ausnehmungsschmalseiten begrenzende Schenkel (7; 11) aufweist, zwischen denen zur Lagerung der Umlenkrolle (8; 10) eine Lagerachse (9: 13) oder zwei einander entgegengerichtete Lagerzapfen fest angeordnet sind oder in denen zwei einander entgegengerichtete Lagerausnehmungen angeordnet sind.

3. Sicherheitsgurt nach Anspruch 2,
dadurch gekennzeichnet, daß
die feste Anordnung der Lagerzapfen oder der Lagerachse (9; 13) an den Schenkeln (7; 11) jeweils durch eine formschlüssige Verbindung, insbesondere durch Niete (N) oder Schrauben, oder durch eine stoffschlüssige Verbindung, insbesondere eine Verschweißung (3), gegeben ist.

4. Sicherheitsgurt nach Anspruch 2 oder 3,
dadurch gekennzeichnet, daß
die Umlenkrolle (10) über Kugel- oder Wälzlager (14) mit der Lagerachse (13) oder den Lagerzapfen oder den Lagerausnehmungen verbunden ist.

5. Sicherheitsgurt nach Anspruch 2 oder 3,
dadurch gekennzeichnet, daß
die Lagerung der Umlenkrolle (8) an der Lagerachse (9) oder den Lagerzapfen oder in den Lagerausnehmungen eine Gleitlagerung ist.

6. Sicherheitsgurt nach Anspruch 2 oder 3,
dadurch gekennzeichnet, daß
die Umlenkrolle (8) und die Lagerachse (9) oder die Lagerzapfen oder das Material der Schenkel im Bereich der Lagerausnehmungen aus einem magnetischen Werkstoff bestehen oder als Elektromagneten ausgeführt sind und die Umlenkrolle (8) im Abstand zur Lagerachse (9) auf dieser oder im Abstand zu den Lagerzapfen oder den Lagerausnehmungen über ein Magnetfeld gelagert ist.

7. Sicherheitsgurt nach einem oder mehreren der vorhergehenden Ansprüche,
dadurch gekennzeichnet, daß
die Umlenkrolle (8; 10) zumindest im wesentlichen zylinderförmig ausgebildet ist.

8. Sicherheitsgurt nach einem oder mehreren der vorhergehenden Ansprüche,
dadurch gekennzeichnet, daß
die Umlenkrolle (8, 10) an den Enden trichter- oder trompetenförmig ausgebildet ist.

9. Sicherheitsgurt nach einem der vorhergehenden Ansprüche,
dadurch gekennzeichnet, daß
die Umlenkrolle (8, 10) eine Oberfläche mit hohem Reibkoeffizienten gegenüber dem Sicherheitsgurt hat.

10. Sicherheitsgurt nach Anspruch 9,
dadurch gekennzeichnet, daß
die Oberfläche der Umlenkrolle (8, 10) geriffelt ist.

11. Sicherheitsgurt nach einem oder mehreren der vorhergehenden Ansprüche,
dadurch gekennzeichnet, daß
die Oberfläche der Umlenkrolle (10) mit im Abstand und koaxial angeordneten Einsenkungen (15) versehen ist.

12. Sicherheitsgurt nach einem oder mehreren der Ansprüche 1 bis 8 oder 10 bis 11, dadurch gekennzeichnet, daß
der Mantel der Umlenkrolle (8) mit einem Material zur Erhöhung des Reibkoeffizienten beschichtet ist.
